# EUROPEAN PATENT APPLICATION

(11) **EP 0 579 471 A1**
(43) Date of publication of application: **19.01.1994**
(21) Application number: 93305455.3
(22) Date of filing: 13.07.1993
(51) Int. Cl.: G02B 26/08

(54) **Scanning apparatus**

(30) Priority: 13.07.1992 IL 102485
(71) Applicant: STATE OF ISRAEL MINISTRY OF DEFENCE RAFAEL ARMAMENT DEVELOPMENT AUTHORITY, Haifa 31 021 (IL)
(72) Inventor: Netzer, Yishay, I-20124 Israel (IL); Franenkl, Efraim, I-26332 Kiryat Motzkin (IL)
(74) Representative: Powell, Timothy John

(57) **Abstract**

Scanning apparatus including a scanning mirror (20) having a reflective surface (22) and a substrate (21), electromagnetic apparatus for deflection of the scanning mirror (20) and including a coil assembly (24,26) mounted onto said scanning mirror (20) and a permanent magnet assembly (112), capacitive apparatus (14) for sensing the deflection of the scanning mirror (20), and a base (10). The capacitive apparatus (14) includes apparatus for sensing the change in capacitance between a conductive element (25) fixed to the mirror (20) and at least a portion of the base (10).

## Description

### FIELD OF THE INVENTION

The present invention relates to scanning apparatus generally and more particularly to high speed reciprocating scanning apparatus.

### BACKGROUND OF THE INVENTION

There exist a wide variety of scanning devices useful for high speed optical scanning. A general review of scanning systems employing such devices appears in Thermal Imaging Systems, by J. M. Lloyd, Plenum Press, New York and London, 1975.

In U.S. Patent 3,694,741 a butterfly type capacitor is provided for measuring the angle of deflection of a scanning mirror.

In an article entitled "Novel Laser Scanner Uses Moving Magnet Design for Superior Performance," by Jean Montagu (Photonics Spectra, May 1992), the author describes a scanning system in which magnets are attached to the moving portion of the scanner. Such scanners have a relatively high inertia.

In an article entitled "High Accuracy Capacitive Position Sensing For Low Inertia Actuators," by B.P. Stokes (SPIE Vol. 1454 (1991) pp. 223-229), the author describes a scanner having a capacitive position sensor.

### SUMMARY OF THE INVENTION

The present invention seeks to provide an improved high speed scanner. There is thus provided in accordance with a preferred embodiment of the present invention scanning apparatus including:
a scanning mirror;
a base;
electromagnetic apparatus for deflection of the scanning mirror;
capacitive apparatus for sensing the deflection of the scanning mirror,
the capacitive apparatus including apparatus for sensing the change in capacitance between a conductive element fixed to the mirror and a portion of the base.

Additionally in accordance with a preferred embodiment of the present invention, the electromagnetic apparatus comprises a pair of permanent magnets, each magnetized along an axis generally perpendicular to a zero deflection position plane of the mirror.

In accordance with an alternative embodiment of the present invention the electromagnetic apparatus comprises a single permanent magnet magnetized along an axis generally parallel to a zero deflection position plane of the mirror and iron pole pieces disposed adjacent the poles of the permanent magnet and an electromagnet coil mounted onto the underside of the mirror for motion therewith between the magnet poles and the pole pieces.

Further in accordance with an embodiment of the invention, the mirror is flexibly mounted onto a base by means of flexible metal leaf pivots. Preferably, the mirror comprises an insulative substrate, a first flexible pivot provides electrical grounding for the capacitive plate and a second flexible pivot provides a conductive path carrying an energizing current to the coils mounted onto the underside of the mirror.

Additionally in accordance with a preferred embodiment of the invention, the base is formed of an electrically insulative material and provides a substrate onto which a printed circuit is formed, the printed circuit defining part of the capacitive apparatus.

Further in accordance with a preferred embodiment of the present invention, the mirror includes an insulative substrate and the flexible pivots provide an electrical conductive path associated with the electromagnetic apparatus.

Additionally in accordance with a preferred embodiment of the present invention there is provided a method for producing scanning apparatus including the steps of:
providing a planar insulative mirror substrate;
coating the planar insulative mirror substrate with a metallic coating; and
soldering stiffening elements onto the mirror substrate.

In accordance with a preferred embodiment of the present invention, the step of soldering comprises joining the substrate, the stiffening elements and flexible pivots together in a single vapor phase operation.

### BRIEF DESCRIPTION OF THE DRAWINGS

The present invention will be understood and appreciated more fully from the following detailed description, taken in conjunction with the drawings in which:
Fig. 1 is an exploded, pictorial illustration of scanning apparatus constructed and operative in accordance with a preferred embodiment of the present invention;
Fig. 2 is a pictorial illustration of the underside of a mirror forming part of the apparatus of Fig. 1;
Fig. 3 is a pictorial illustration of the assembled scanning apparatus of Figs. 1 and 2;
Fig. 4 is a detailed pictorial illustration of the mirror mounting in the apparatus of Figs. 1 - 3;
Fig. 5A is a cross-sectional illustration of the apparatus of Figs. 1 - 4;
Fig. 5B is a cross-sectional illustration of an alternative preferred embodiment of the apparatus of Figs. 1 - 4;
Fig. 6A is an exploded, pictorial illustration of scanning apparatus constructed and operative in accordance with a preferred embodiment of the present invention;
Fig. 6B is an assembled, pictorial illustration of scanning apparatus constructed and operative in accordance with a preferred embodiment of the present invention; and
Fig. 7 is a cross-sectional illustration of the scanning apparatus of Figs. 6A and 6B.

### DETAILED DESCRIPTION OF PREFERRED EMBODIMENTS

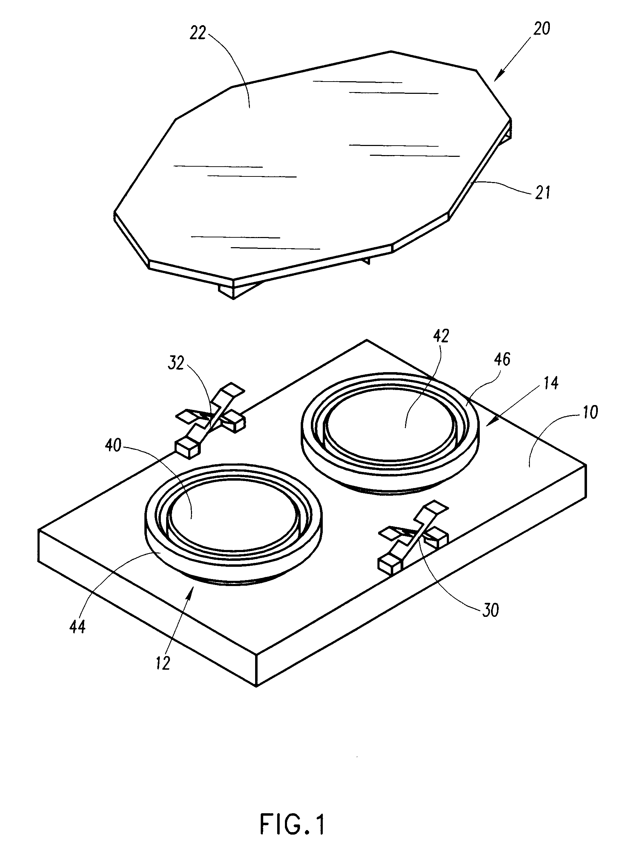

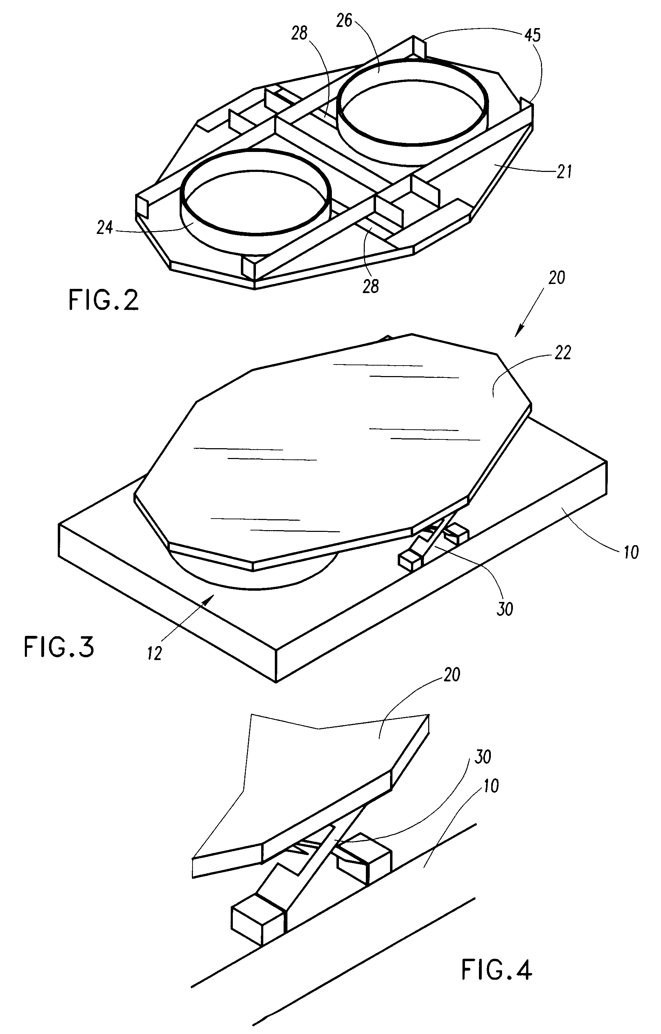

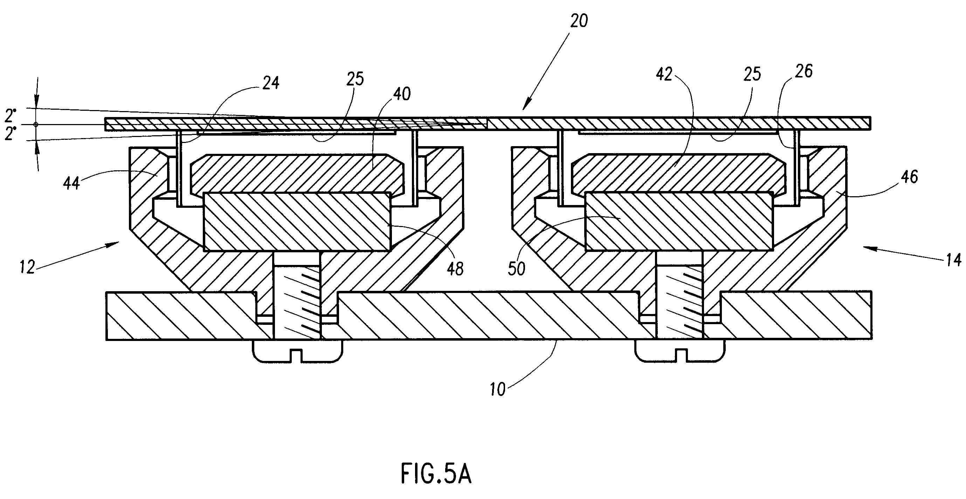

Reference is now made to Figs. 1 - 5, which illustrate a scanner constructed and operative in accordance with a preferred embodiment of the present invention. The scanner comprises a base 10, preferably formed of an electrically insulative material. Mounted on base 10 are first and second magnet and capacitor assemblies 12 and 14.

Pivotably mounted onto base 10 is a scanning mirror assembly 20 including a substrate 21 having a reflective top surface 22 and being formed on the underside thereof with first and second cylindrical coils 24 and 26 which operatively engage respective magnet and capacitor assemblies 12 and 14.

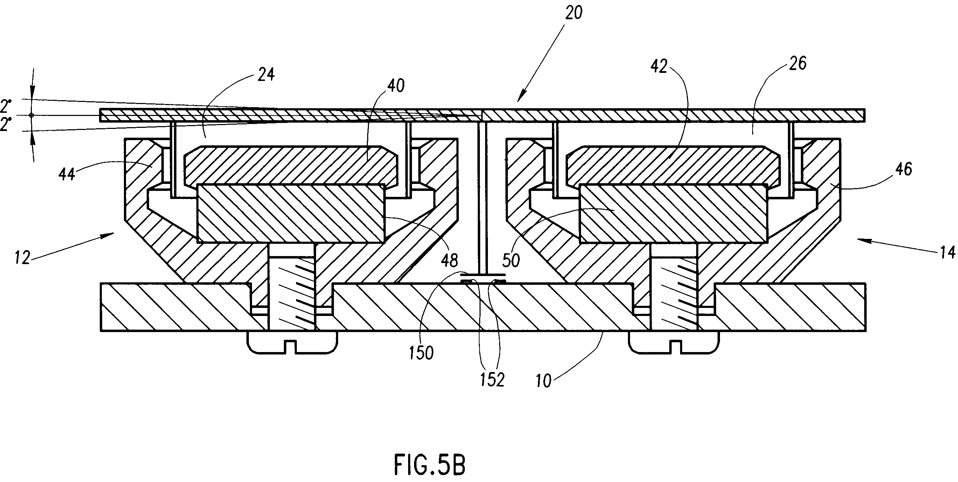

In a preferred embodiment of the invention substrate 21 is a ceramic plate and the conductors and soldering surfaces are formed on the underside thereof by thick or thin film hybrid techniques. In a preferred embodiment of the invention substrate 25 is formed by conventional molding techniques. In a more preferred embodiment of the invention, substrate 21 is formed by brazing together standard 25 mil thick alumina plates. Conductive pivot assemblies 30 and 32 each comprise two elongate legs, each of which is soldered to a separate terminal on the underside of substrate 21. In this way, the pivot assemblies provide suitable stiffness in all directions except for the desired tilt direction shown in Figs. 5A and 5B. Furthermore, provision of a number of separately electrically accessible pivot legs allows for a plurality of electrical connections with the underside of substrate 21 for each pivot assembly.

Coils 24 and 26 preferably communicate via conductive pathways 28 printed or otherwise deposited on the underside of scanning mirror substrate 21 and via conductive pivot assemblies 30 and 32 conventional position control circuitry adapted to provide a differential current drive to coils 24 and 26. In general coils 24 and 26 have one common terminal and therefore require three of the four available connections via pivots 30 and 32.

The combination of light alumina or other ceramic plates for substrate 21, printing the underside with solder pads and conductors and the use of the pivots of the invention allows for conveniently mounting coils 24 and 26 on the underside of substrate 21 and for electrically accessing the coils. This results in an especially light assembly having low inertia.

The underside of mirror substrate 21 is preferably formed with reinforcing strip assembly 45, which may be attached thereto by any suitable technique, preferably vapor phase soldering. Preferably, the strip is ceramic to further reduce the weight and inertia of the assembly.

Magnet and capacitor assemblies 12 and 14 include respective inner pole pieces 40 and 42, peripheral yokes 44 and 46 and magnets 48 and 50 respectively.

It is appreciated that periodic actuation of coils 24 and 26 in a mutually out of phase relationship provides pivotal vibratory motion of substrate 21 relative to the base 10, as illustrated in Figs. 5A and 5B. Typical vibration ranges are approximately 2 degrees to each side of center.

In accordance with a preferred embodiment of the invention, a differential capacitor is defined by conductive layers on mirror assembly 20 and each of magnet and capacitor assemblies 12 and 14.

In the embodiment of Fig. 5A the portion of the differential capacitor on mirror assembly 20 is formed by a pair of conducting surfaces 25 formed on the back of the mirror assembly. These surface are electrically connected and are accessed by the remaining leg of the pivot assemblies. The split side of the differential capacitor is formed by assemblies 12 and 14 which are electrically insulated from the remainder of the structure. Tilting of the mirror assembly 20 causes an increase of capacitance in one of the capacitors thus formed and a decrease in the capacitance of the other capacitor. This difference in capacitance which is indicative of the tilt of mirror assembly 20 is measured by conventional capacitance measurement circuitry such as a capacitance bridge. The differential capacitance can then be converted to an indication of tilt by a look-up table or other conventional circuitry.

In an alternative preferred embodiment of the invention, shown in Fig. 5B, a differential capacitance is formed between a plate 150 attached to the back side of substrate 21 and a split conducting plate 152 attached to base 10. When assembly 20 tilts as described above, the capacitance between plate 150 and the respective portions of split plate 152 changes. This change in capacitance is measured in a similar manner to that of Fig. 5A.

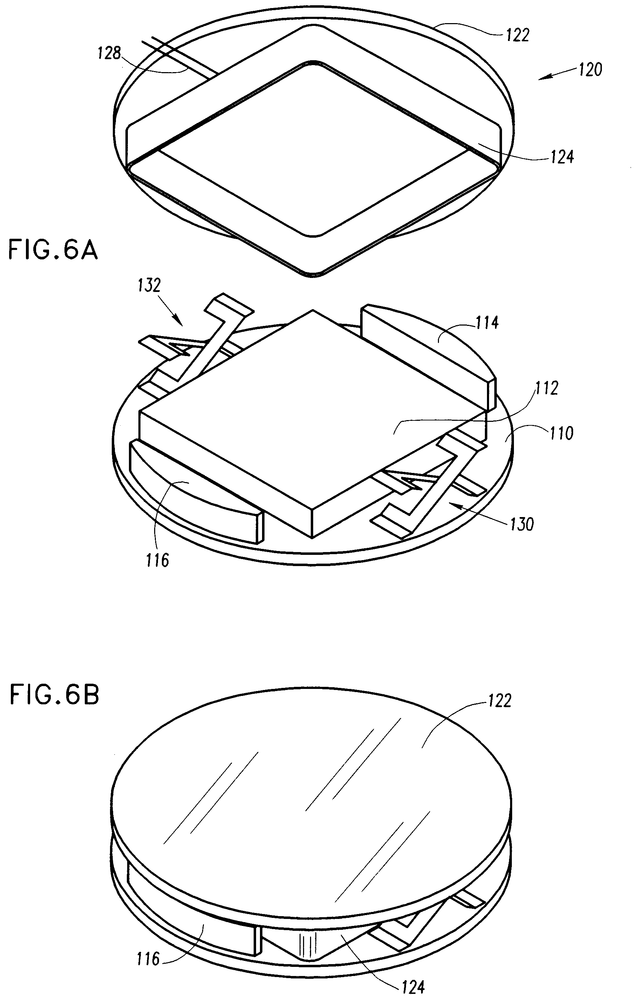

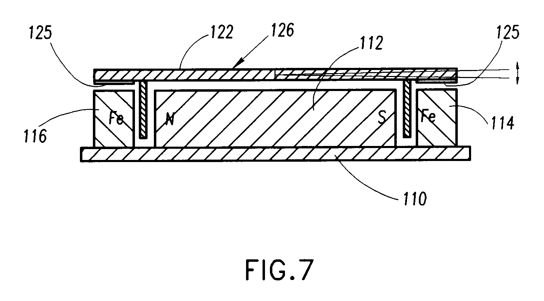

Reference is now made to Figs. 6A, 6B and 7, which illustrate a scanner constructed and operative in accordance with an alternative, preferred, embodiment of the present invention. The scanner comprises a base 110, preferably formed of an electrically insulative material. Mounted on base 110 are a magnet 112, magnetized as indicated in Fig. 7 and first and second soft iron pole pieces 114 and 116, disposed adjacent to and spaced from the poles of magnet 112.

Pivotably mounted onto base 10 is a scanning mirror assembly 120 having a reflective top surface 122 and being formed on the underside thereof with a square cylindrical coil 124 which operatively engages magnet 112 and pole pieces 114 and 116 in non-touching electromagnetic engagement.

Coil 124 preferably communicates via conductive pathways 128 printed or otherwise deposited on the underside of scanning mirror assembly 120 and via conductive pivot assemblies 130 and 132 to conventional position control circuitry. In this embodiment, conductive surfaces 125' form one plate of the differential capacitor and electrically insulated pole-pieces 114 and 116 form the other, split, side of the capacitor.

It is appreciated that periodic actuation of coil 124 provides pivotal vibratory motion of the vibratory mirror assembly 120 relative to the base 110, as illustrated in Fig. 7. Typical vibration ranges are approximately 2 degrees to each side of center.

In each of the embodiments described above, the capacitance of the differential capacitor is utilized by suitable circuitry, which may be mounted on the base of the scanner, for sensing the angular position of the scanner.

It will be appreciated by persons skilled in the art that the present invention is not limited by what has been particularly shown and described hereinabove. Rather the scope of the present invention is defined only by the claims which follow:

## Claims

1. Scanning apparatus comprising:
a scanning mirror including a reflective surface and a substrate;
electromagnetic means for deflection of the scanning mirror and including a coil assembly mounted onto said scanning mirror and a permanent magnet assembly;
capacitive means for sensing the deflection of the scanning mirror,
a base;
said capacitive means including means for sensing the change in capacitance between a conductive element fixed to the mirror and at least a portion of said base.

2. Scanning apparatus according to claim 1 and wherein said electromagnetic means comprises a single permanent magnet magnetized along an axis generally parallel to a zero deflection position plane of the mirror and wherein said capacitive means comprises a differential capacitor.

3. Scanning apparatus according to either of claims 1 and 2 and wherein said differential capacitor includes a conductive plate formed of two portions which are electrically insulated from each other.

4. Scanning apparatus according to claim 1 and wherein said electromagnetic means comprises a pair of permanent magnets, each magnetized along an axis generally perpendicular to a zero deflection position plane of the mirror.

5. Scanning apparatus according to any of the preceding claims and wherein said mirror is flexibly mounted onto a base by means of flexible pivots each including a plurality of conducting legs.

6. Scanning apparatus according to claim 5 and wherein said mirror comprises an insulative substrate and wherein said legs include a first leg which provides an electrical connection for the capacitive element and wherein a plurality of said legs provide a conductive path carrying an energizing current to said coil assembly.

7. Scanning apparatus according to claim 5 and wherein said base is formed of an electrically insulative material which provides a substrate onto which a printed circuit is formed, said printed circuit defining part of said capacitive means.

8. Scanning apparatus comprising:
a scanning mirror comprising a substrate;
metallic flexible pivots pivotably mounting said substrate on a base;
a coil assembly mounted on said substrate and receiving electrical current via said metallic flexible pivots;
a permanent magnet assembly arranged for electromagnetic interaction with said coil assembly for producing oscillation of said mirror; and
means for determining the angular position of the mirror by measuring the capacitance between a first conductive member which is attached to said mirror and a second conductive member which is fixed relative to said base.

9. Scanning apparatus according to claim 8 and wherein said first conductive member comprises a conductive coating on a surface of said substrate.

10. Scanning apparatus according to claim 8 or claim 9 and wherein said substrate is formed of a ceramic material.

11. Scanning apparatus according to any of claims 8 - 10 and wherein said base comprises a printed circuit which includes circuit means forming part of said means for determining the angular position of said mirror.

12. Scanning apparatus comprising:
a scanning mirror comprising a substrate having a front reflecting surface and a back surface; and
electromagnetic means for deflection of the scanning mirror comprising:
at least one coil mounted on the back surface;
a fixed base;
a magnet assembly mounted on the base; and
means for energizing the coils.

13. Apparatus according to claim 12 wherein the substrate is non-conductive.

14. Apparatus according to claim 13 and also including at least one conductive pathway provided on the back surface.

15. Apparatus according to claim 13 or claim 14 wherein solderable area are provided on portions of the back surface.

16. Scanning apparatus according to any of claims 12-15 and wherein said substrate is flexibly mounted onto a base by means of flexible pivots.

17. Apparatus according to claim 16 wherein the flexible pivots each includes:
at least two elongate members each having end portions attached to the fixed base and to the back surface respectively, each elongate member forming an angle with each of the base and the back surface.

18. Apparatus according to any of claims 12-17 and further comprising:
capacitive means for sensing the deflection of the scanning mirror, said capacitive means including means for sensing the change in capacitance between a conductive element fixed to the mirror and at least a portion of said electromagnetic means.
